(19) Europäisches Patentamt
European Patent Office
Office européen des brevets

(11) **EP 3 367 072 B1**

(12) **EUROPÄISCHE PATENTSCHRIFT**

(45) Veröffentlichungstag und Bekanntmachung des Hinweises auf die Patenterteilung:
**02.01.2019 Patentblatt 2019/01**

(51) Int Cl.:
*G01F 1/32* *(2006.01)*    *G01F 1/66* *(2006.01)*

(21) Anmeldenummer: **17157914.7**

(22) Anmeldetag: **24.02.2017**

(54) **STRÖMUNGSMESSUNG MIT ULTRASCHALL**

FLOW MEASUREMENT WITH ULTRASOUND

MESURE DE L'ÉCOULEMENT À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.08.2018 Patentblatt 2018/35**

(73) Patentinhaber: **SICK Engineering GmbH**
**01458 Ottendorf-Okrilla (DE)**

(72) Erfinder:
• **Riedel, Ekkehard**
**01109 Dresden (DE)**
• **Dietz, Toralf**
**01465 Langebrück (DE)**
• **Schröter, Gerry**
**01249 Dresden (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
EP-A1- 2 103 911       EP-A2- 1 118 841
WO-A1-2015/040607      DE-B3- 10 312 034
JP-A- 2001 208 585     JP-A- 2002 372 445

• HANS V ET AL: "Comparison of pressure and ultrasound measurements in vortex flow meters", MEASUREM, INSTITUTE OF MEASUREMENT AND CONTROL. LONDON, GB, Bd. 33, Nr. 2, 2. März 2003 (2003-03-02), Seiten 121-133, XP004402295, ISSN: 0263-2241, DOI: 10.1016/S0263-2241(02)00057-X

**Beschreibung**

Die Erfindung betrifft eine Messvorrichtung und ein Verfahren für die Bestimmung einer Strömungsgeschwindigkeit und/oder eines Durchflusses eines in einer Leitung strömenden Fluids nach dem Oberbegriff von Anspruch 1 beziehungsweise 11.

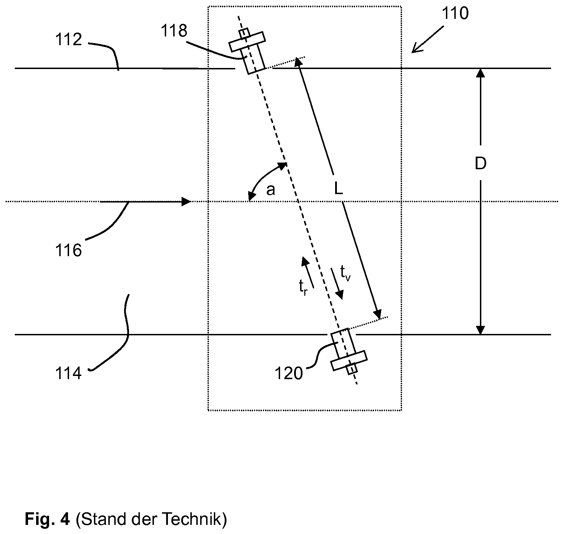

Für die Messung von Fluidgeschwindigkeiten in Rohrleitungen und Kanälen kann die Ultraschallmesstechnik nach dem Differenzlaufzeitverfahren eingesetzt werden. Dabei werden Ultraschallpulse von einem Paar Ultraschallwandler ausgesandt und empfangen, die einander gegenüber an einer Wandung der Leitung angeordnet sind und aus der Laufzeitdifferenz zwischen einem Messpfad mit der Strömung und dem Messpfad in Gegenrichtung entgegen der Strömung wird die Strömungsgeschwindigkeit bestimmt. Dieses bekannte Messprinzip ist in Figur 4 dargestellt. Als wesentlicher Bestandteil einer herkömmlichen Messvorrichtung 110 sind zwei Ultraschallwandler 118, 120 in einem Winkel in der Wandung einer Rohrleitung 112 angeordnet, in der ein Fluid 114 in Pfeilrichtung 116 strömt. Die Ultraschallwandler 118, 120 arbeiten wechselweise als Sender und Empfänger. Die durch das Gas transportierten Ultraschallsignale werden in Strömungsrichtung beschleunigt und gegen die Strömungsrichtung abgebremst. Die resultierende Laufzeitdifferenz wird mit geometrischen Größen zu einer mittleren Fluidgeschwindigkeit verrechnet. Mit der Querschnittsfläche ergibt sich daraus der Betriebsvolumenstrom. Die geometrischen Verhältnisse sind durch die folgenden Variablen beschrieben:

v: Strömungsgeschwindigkeit des Fluids in der Leitung

L: Länge des Messpfades zwischen den beiden Ultraschallwandlern

a: Winkel, unter dem die Ultraschallwandler senden und empfangen

Q: Volumenstrom

D: Durchmesser der Leitung

$t_v$: Laufzeit des Ultraschalls mit der Strömung

$t_r$: Laufzeit des Ultraschalls gegen die Strömung

Daraus ergeben sich für die gesuchten Größen v und Q folgende Beziehungen:

$$(1) \qquad v = L/(2\cos\alpha)\,(1/t_v - 1/t_r)$$

und

$$(2) \qquad Q = v\,1/4\,D^2\,\pi.$$

Dokument EP 2 103 911 A1 offenbart ein Durchflussmessgerät, wobei für die Ermittlung des Durchflusses, das oben detaillierten Laufzeitdifferenzverfahren verwendet wird.

Eine besonders anspruchsvolle Anwendung ist die Strömungsmessung von mit sehr hoher Geschwindigkeit in Leitungen bewegten Gasen. Mit hohe Geschwindigkeiten sind hier Strömungen mit einer Machzahl von > 0,2 gemeint. Ein Beispiel hierfür sind Flaregasleitungen, welche in petrochemischen Anlagen zu Fackeltürmen führen und in denen Restgase des Produktionsprozesses beziehungsweise im Störfall große Gasmengen mit hoher Geschwindigkeit aus der Anlage gebracht werden, wie z.B. in dem Artikel "How much do you flare?", Daryl Belock, in PROCESS - worldwide 3-2006, 1 March 2006 (2006-03-01), pages 18-19, XP055213253, beschrieben. Für derart hohe Strömungsgeschwindigkeiten eines Gases von 100 m/s und mehr wird die Ultraschallmessung auch mangels geeigneter Alternativen eingesetzt. Das ist aber mit Schwierigkeiten verbunden, denn es tritt durch den Abrisswirbel am Ultraschallwandler eine erhebliche Lärmbelastung ("noise") des Wandlers auf. Weiter treten starke Signalverzerrungen und damit Verschlechterung des Signalrauschverhältnisses auf, wenn das Signalpaket durch den Abrisswirbel hindurch zur gegenüberliegenden Sonde gesandt wird. Außerdem ist eine zusätzliche Verwehung des abgestrahlten Signals mit der Gasströmung problematisch.

Diese Probleme führen zu einer Begrenzung der maximal messbaren Geschwindigkeit. Dieser Wert ist aufgrund physikalischer Zusammenhänge im Wesentlichen abhängig vom Gasmedium, der spezifischen signalfrequenzabhängigen Dämpfung, dem Abstand der Sensoren, also der Rohrnennweite, sowie deren Abstrahlcharakteristik und der Arbeitsfrequenz der Ultraschallwandler.

Eine im Stand der Technik eingesetzte Maßnahme zur Verbesserung der Messergebnisse mit Ultraschall ist, beide Ultraschallwandler um einen zusätzlichen Vorhaltewinkel von einigen Grad gegen die Strömung anzustellen, so dass also ausgesandter Ultraschall bei idealen geraden Messpfaden das jeweilige Gegenüber verfehlen würde und wegen der Verwehung jeweils mit der Strömung zu dem gegenüberliegenden Ultraschallempfänger getrieben wird. Damit sollen Effekte der hohen Gasgeschwindigkeit ausgeglichen werden. Zudem werden zur Kompensation von Strömungseffekten, z.B. Lärm ("noise"), aufwändige Signalauswertungen vorgenommen. Diese Maßnahmen sind aufwändig und genügen jedoch nicht, zufriedenstellende Messgenauigkeit zu erreichen. Bei sehr hohen Strömungsgasgeschwindigkeiten versagen auch diese Maßnahmen.

Insbesondere bei Rohrleitungen mit großer Nennweite ist es bekannt, die Ultraschallwandler vollständig in das Gas einzubringen, um den Messpfad zu verkürzen. Dazu wird im Stand der Technik (US 4,754,650) vorgeschlagen, beide Ultraschallwandler mit einer Halterung in die Strömung einzubringen. Die Ultraschallwandler sind an der gemeinsamen Halterung angebracht, die wie eine Lanze schräg in die Leitung eingeführt wird, so dass wenigstens ein Ultraschallwandler im Innenraum der Leitung angeordnet ist. Diese Anordnung dient nach Beschreibung der US 4,754,650 der besonders genauen Messung geringer Strömungsgeschwindigkeiten und ist bei hohen Strömungsgeschwindigkeiten und Leitungen großer Nennweiten gänzlich ungeeignet durch extreme Strömungsstörungen durch die Halterung. Es kommt zu starken Abrissturbulenzen an den Ultraschallwandlern und der Halterung, wodurch Druckwellen und damit stark störender Lärm auf den Ultraschallwandler verursacht wird.

Aus der EP 2 103 912 B1 schließlich ist ein Ultraschall-Durchflussmesser bekannt, der insbesondere für hohe Strömungsgeschwindigkeiten ausgelegt ist. Dort weisen die Ultraschallwandler und die sie umgebende Halterung eine spezielle strömungsoptimierte Kontur auf, welche Abrisswirbel unterdrückt und damit störenden Lärm auch bei hohen Strömungsgeschwindigkeiten reduziert. Bei sehr hohen Strömungsgeschwindigkeiten versagen auch diese Maßnahmen.

Aus der DE-A 2809254 ist es bekannt, eine Strömungsgeschwindigkeit über die Erzeugung von Abrisswirbeln zu bestimmen über die Beziehung

$$(3) \qquad f = S * (v/d)$$

wobei f die Emissionsfrequenz der Wirbel, S die Strouhal-Zahl, v die Strömungsgeschwindigkeit und d eine charakteristische Querabmessung eines Hindernisses ist, an denen die Wirbel entstehen. Die Strouhal-Zahl beträgt im allgemeinen 0,21. Zur Messung der Frequenz sind in diesem Dokument neben thermischen, piezoelektrischen, kapazitiven und induktiven Fühlern, unter anderem Ultraschallfühler vorgeschlagen.

Ausgehend von diesem Stand der Technik ist es Aufgabe der Erfindung, eine Messvorrichtung und ein Verfahren bereitzustellen, mit der die Bestimmung einer Strömungsgeschwindigkeit eines Fluids mit Ultraschallwandlern über einen großen Strömungsgeschwindigkeitsbereich möglich ist und die Messung höchster Strömungsgeschwindigkeiten ermöglicht.

Diese Aufgabe wird durch eine Messvorrichtung gemäß Anspruch 1 und ein Messverfahren gemäß Anspruch 11 gelöst. Die erfindungsgemäße Lösung geht von der Erkenntnis aus, dass sich Strömungsstörungen, z.B. Abrisswirbel, bei hohen Strömungsgeschwindigkeiten und damit verbundene störende Lärmerzeugung nicht vermeiden lässt. Aber anstatt diese Störungen so gut es geht zu unterdrücken, geht die Erfindung einen anderen Weg, nämlich die Lärmerzeugung zu nutzen.

Dazu weist die Messvorrichtung für die Bestimmung einer Strömungsgeschwindigkeit und/oder eines Durchflusses eines in einer Leitung strömenden Fluids mindestens einen ersten Ultraschallwandler und einem zweiten Ultraschallwandler auf, die in herkömmlicher, bekannter Weise genutzt werden, die Strömungsgeschwindigkeit zu bestimmen. Dazu sind die Wandler in der Leitung derart zueinander angeordnet sind, dass im Betrieb der auf einem Messpfad vom ersten Ultraschallwandler zum zweiten Ultraschallwandler ausgesandte und empfangene Ultraschall gegenüber einem auf dem Messpfad in umgekehrter Richtung von dem zweiten Ultraschallwandler gesendeten und von dem ersten Ultraschallwandler empfangenen Ultraschall eine von der Strömungsgeschwindigkeit abhängige Laufzeitdifferenz aufweist. Weiter ist eine Steuer- und Auswerteeinrichtung zur Ansteuerung der Ultraschallwandler und Auswertung der Signale der Ultraschallwandler vorgesehen, die die Signale der Ultraschallwandler in bekannter Weise (siehe obige Gleichungen (1) und (2) auswertet und daraus die Strömungsgeschwindigkeit bestimmt. Erfindungsgemäß ist ein lärmmessender Ultraschallwandler vorgesehen, der den beim Vorbeiströmen des Fluids in diesem Ultraschallwandler erzeugten Lärm misst. Die Steuer- und Auswerteeinrichtung ist ausgebildet, die Strömungsgeschwindigkeit anhand der Lärmmessungen zu bestimmen.

In einer ersten Ausführungsform kann der lärmmessende Ultraschallwandler durch den ersten oder den zweiten Ultraschallwandler selbst gebildet sein. In dieser Ausführung kann ein Ultraschallwandler mit dieser Doppelfunktion zum Beispiel im Zeitmultiplex einmal für die Laufzeitmessung arbeiten und einmal für die Lärmmessung.

Bevorzugt ist der lärmmessende Ultraschallwandler von dem ersten und zweiten verschieden, denn dann können erster und zweiter Ultraschallwandler für die Laufzeitmessung optimiert ausgelegt werden, nämlich so dass an diesen beiden Ultraschallwandlern möglichst wenig Lärm erzeugt wird. Und der lärmmessende Ultraschallwandler kann optimiert für die Lärmmessung ausgebildet sein. Die beiden Messverfahren konkurrieren miteinander. Die Laufzeitmessung benötigt möglichst wenig Lärmerzeugung, wohingegen die Lärmmessung gerade Lärm benötigt. Mit einem dritten Ultraschallwandler kann diesen konkurrierenden Ansprüchen besser gerecht werden.

Die Erfindung hat den Vorteil, dass einerseits bei nicht zu hohen Strömungsgeschwindigkeiten die bekannte, sehr genaue Bestimmung der Geschwindigkeit über das Laufzeitverfahren möglich ist und wenn mit steigender Strömungsgeschwindigkeit dieses Verfahren versagt, kann dennoch die Strömungsgeschwindigkeit jetzt über den lärmmessenden Ultraschallwandler bestimmt werden. Der Messbereich ist zu hohen Strömungsgeschwindigkeiten erheblich erweitert. Dabei wird der an sich störende Effekt des bei hohen Geschwindigkeiten unvermeidlichen Lärms, z.B. verursacht von Abrisswirbeln, genutzt. Damit sind Messungen in einem sehr großen Strömungsgeschwindigkeitsbereich mittels Ultraschall möglich geworden, die bisher nicht möglich waren.

Die generellen Vorteile von Ultraschallmessungen gegenüber anderen Verfahren bleiben ebenso erhalten, nämlich Unabhängigkeit von Druck, Temperatur und Gaszusammensetzung und weiterhin hohe Präzision, Wartungsfreiheit, geringer Einfluss durch Verschmutzungen, Möglichkeiten der Selbstdiagnose und Vermeidung eines Druckabfalls durch die Messung.

Der besondere Vorteil liegt somit in der Kombination der beiden Messverfahren bei Ausnutzung der gleichen Sensorik. Dabei werden die jeweiligen Schwächen der Verfahren kompensiert. Bei Strömungsgeschwindigkeiten, bei denen Messsignale beider Verfahren zu Verfügung stehen, kann der Messwert aus der Lärmmessung auf den Laufzeitdifferenzmesswert automatisch justiert werden. Sobald die Strömungsgeschwindigkeit den kritischen Bereich erreicht und überschreitet, wird nur noch der Messwert der des lärmmessenden Ultraschallwandlers genommen.

In einer Ausführungsform erfasst der lärmmessende Ultraschallwandler die Energie des Lärms, also die Intensität des Lärms (Lautstärke) und die Steuer- und Auswerteeinheit bestimmt daraus die Strömungsgeschwindigkeit (v).

Bevorzugt sind erster und zweiter Ultraschallwandler in je einem Gehäuse untergebracht. Dieses Gehäuse kann auch größer sein als die eigentlichen Ultraschallwandler und ihre Membrane. Es schafft so Freiheitsgrade der Translation und der Verkippung der Ultraschallwandler gegenüber ihrem Gehäuse, wie es die optimalen Messpfade fordern, ohne dabei die der Strömung angebotene Kontur zu verändern, welche durch das Gehäuse vorgegeben ist.

Besonders bevorzugt ist das Gehäuse des ersten und des zweiten Ultraschallwandlers senkrecht in die Leitung eingesetzt und der jeweilige Ultraschallwandler ist mit seiner Abstrahlfläche um einen Winkel verkippt, so dass der erste und der zweite Messpfad gegenüber einer Querschnittsebene der Leitung schräg verlaufen. Die Messpfade verlaufen damit schräg sowohl zur Strömungsrichtung wie zu einer Senkrechten zur Strömungsrichtung. Das senkrechte Einsetzen erleichtert die Montage und die Ausrichtung, denn ein schräges, stabiles Anschweißen der Stutzen vor Ort, um eine exakte Ausrichtung zu erzielen, erfordert einen erhöhten technischen Aufwand, ist kompliziert und fehlerbehaftet. Die Verkippung von erstem und zweitem Ultraschallwandler gegenüber dem Gehäuse ermöglicht die einfachere senkrechte Montage und gleichzeitig die freie, durch Messanforderungen vorgegebene Ausrichtung der Ultraschallwandler. Der Verkippungswinkel kann dabei so gewählt sein, dass die Ultraschallwandler zueinander ausgerichtet sind, es kann aber auch ein zusätzlicher Vorhaltewinkel in Gegenrichtung der Strömung vorgesehen sein, so dass ihre Abstrahlrichtung namentlich gegenüber Verwehungen zu möglichst genauen Messergebnissen führt. Die Gehäuse für den ersten und den zweiten Ultraschallwandler haben eine strömungsoptimierten Außenkontur, um am Ort der ersten und zweiten Ultraschallwandler möglichst wenig Lärm zu erzeugen, denn diese arbeiten konventionell mit der Laufzeitmethode.

In der Ausführungsform mit einem dritten Ultraschallwandler als lärmmessenden Ultraschallwandler kann dieser in einem eigenen Gehäuse vorgesehen sein. Dieses Gehäuse kann dazu dienen, am Ort des dritten Ultraschallwandlers absichtlich Lärm zu erzeugen, zum Beispiel dadurch dass das Gehäuse in die Strömung hineinragt oder durch strömungsstörende und damit lärmverursachende Perforierungen oder Verformungen des Gehäuses oder durch einen in die Strömung hineinragenden Störkörper, der vom Gehäuse abstehen kann. Der Lärm kann aber auch einfach durch die an dem dritten Ultraschallwandler vorbeiströmende Strömung verursacht sein.

Damit durch den Lärm, also die Strömungsstörungen, die konventionellen Messungen mit dem ersten und zweiten Ultraschallwandler wenig gestört werden, sollten die absichtlichen Strömungsstörungen möglichst in der Nähe des dritten Ultraschallwandlers erfolgen. In Weiterbildung ist deshalb vorgesehen, dass der Störkörper unmittelbar stromaufwärts des dritten Ultraschallwandlers angeordnet ist.

Um den dritten Ultraschallwandler unabhängig von der Strömungsrichtung nutzen zu können, ist in einer Ausführung vorgesehen, dass zwei Störkörper vorhanden sind, je einer stromaufwärts und einer stromabwärts des dritten Ultraschallwandlers.

In einer weiteren Ausführungsform erfasst der lärmmessende Ultraschallwandler eine Ablösefrequenz f, mit der sich Wirbel ablösen. Die Steuer- und Auswerteeinrichtung ist dann dazu ausgebildet, die Strömungsgeschwindigkeit (v) über die gemessene Ablösefrequenz (f) zu bestimmen.

Dies hat den Vorteil, dass in der Steuer- und Auswerteeinheit die Strömungsgeschwindigkeit v aus der Ablösefrequenz f sehr einfach über die bekannte lineare Beziehung

$$(3) \qquad v = (f*d)/S$$

bestimmt werden kann. Dabei ist S die Strouhal-Zahl und d eine Querabmessung des die Abrisswirbel verursachenden Objektes, z.B. der lärmmessende Ultraschallwandler oder dessen Gehäuse.

Um die Druckschwankungen durch die Abrisswirbel optimal zu empfangen, ist der lärmmessende Ultraschallwandler so angeordnet, dass die Wirbel sich im Bereich einer Membran des lärmmessenden Ultraschallwandlers ablösen.

In der Ausführungsform mit einem dritten Ultraschallwandler und um die herkömmliche Laufzeitmessung mit erstem und zweitem Ultraschallwandler möglichst wenig zu stören ist in Weiterbildung der Erfindung vorgesehen, dass der dritte Ultraschallwandler stromabwärts der ersten und zweiten Ultraschallwandler angeordnet ist. Ablösende Wirbel können dann die Messung auf dem Messpfad nicht direkt stören.

Die Leitung ist vorzugsweise eine Rohrleitung mit zylindrischem oder rechteckigem Querschnitt, die für hohe Strömungsgeschwindigkeiten von zumindest 100 m/s oder sogar von zumindest 150 m/s ausgebildet ist und eine Flaregasleitung ist. Die erfindungsgemäße Nutzung von Abrisswirbeln erschließt der Ultraschallmessung diese neuen Anwendungen mit höchsten Strömungsgeschwindigkeiten. Natürlich sind Rohrleitungen mit anderem Querschnitt von der Erfindung umfasst, sofern darin hohe Strömungsgeschwindigkeiten erreicht werden können.

Gegenstand der Erfindung ist auch ein Verfahren für die Bestimmung einer Strömungsgeschwindigkeit eines in einer Leitung strömenden Fluids, das mit der erfindungsgemäßen Messvorrichtung möglich ist. Dabei wird in konventioneller Weise eine Strömungsgeschwindigkeit bestimmt, nämlich über die Laufzeitdifferenz von Ultraschall, der auf einem Messpfad vom ersten zum zweiten Ultraschallwandler läuft und in umgekehrter Richtung vom zweiten zum ersten Ultraschallwandler läuft. Zusätzlich wird erfindungsgemäß mit dem ersten oder zweiten oder einem dritten Ultraschallwandler die beim Vorbeiströmen des Fluids an diesem Ultraschallwandler erzeugte Lärmenergie (Intensität), gemessen. In der Steuer- und Auswerteeinheit wird aus den Messsignalen die Strömungsgeschwindigkeit anhand der Lärmenergiemessungen bestimmt. Testergebnisse zeigen, dass ein Vergleich von Strömungsgeschwindigkeiten, die erfindungsgemäß über die Lärmenergiewerte bestimmt wurden, mit anderweitig gemessenen Referenzwerten eine überraschende und ausreichend gute Übereinstimmung ergibt. Damit sind Messungen der Strömungsgeschwindigkeit mittels Ultraschallwandlern möglich geworden, die mit der bisherigen Laufzeittechnik nicht erreicht werden konnten.

Um dabei eine gute Referenz zu haben, also einem gemessenen Lärmenergiewert einer Strömungsgeschwindigkeit zuordnen zu können, ist es vorteilhaft, wenn in einer Einlernphase oder beim Hochfahren des Fluiddurchflusses zunächst mittels des ersten und des zweiten Ultraschallwandlers Strömungsgeschwindigkeiten in konventioneller Art nach dem Laufzeitdifferenzverfahren bestimmt werden und mit dem lärmmessenden Ultraschallwandler die zugehörige Lärmenergie gemessen wird. Die einzelnen Strömungsgeschwindigkeitswerte werden dann zusammen mit den jeweils zugehörigen, gemessenen Lärmenergiewerten gespeichert und der Zusammenhang der Wertepaare in einer Auswerteeinheit durch eine mathematische Funktion approximiert. Bei steigender Strömungsgeschwindigkeit, wenn die Strömungsgeschwindigkeitsmessung mit den ersten beiden Ultraschallwandlern versagt, wird anhand der dann gemessenen Lärmenergiewerte des lärmmessenden Ultraschallwandlers über die approximierte Funktion mittels Extrapolation die Strömungsgeschwindigkeit bestimmt. Tests haben gezeigt, dass die Extrapolation und anderweitig gemessene Referenzwerte eine ausreichend gute Übereinstimmung aufweisen.

Wenn die gespeicherten Lärmenergiewerte immer dann aktualisiert werden und infolgedessen die Approximation aktualisiert wird, wenn eine Messung der Strömungsgeschwindigkeit nach dem Laufzeitdifferenzverfahren möglich ist, erfolgt eine permanente Anpassung an Referenzwerte, wodurch die Lärmenergiewerte permanent die bestmöglichen Ergebnisse liefern.

Eine mathematische Funktion der Form,

$$(4) \qquad LW = c_0 + c_1 * \log(v) + c_2 * [\log(v)]^2$$

wobei LW ein Wert für den Lärm ist, v die Strömungsgeschwindigkeit bezeichnet und $c_0$, $c_1$ und $c_2$ mit der Approximation zu bestimmende Koeffizienten sind, gibt den Zusammenhang zwischen Lärm und Strömungsgeschwindigkeit zufriedenstellend wieder und liefert zufriedenstellende Strömungswerte. Es ist auch denkbar, dass die Formel in anderer geeigneter Form gewählt werden kann. Entscheidend ist, dass sie eine Extrapolation über den mittels konventioneller Laufzeittechnik messbaren Bereich hinaus zulässt und sich weiter stetig verhält.

Bei Kenntnis des Leitungsquerschnitts ist über die Strömungsgeschwindigkeit eine Bestimmung des Durchflusses des in der Leitung strömenden Fluids möglich.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1       einen Längsschnitt durch eine Rohrleitung mit einem ersten Beispiel einer erfindungsgemäßen Messvorrichtung;

Fig. 2       ein schematisches Blockschaltbild der Messvorrichtung gemäß Fig. 1;

Fig. 3a-d       Ausführungsformen des lärmmessenden Ultraschallwandlers;

Fig. 4       einen Längsschnitt durch eine Rohrleitung mit einer Messvorrichtung nach dem Stand der Technik zur Erläuterung eines bekannten Ultraschallmessverfahrens mittels einer Laufzeitdifferenz.

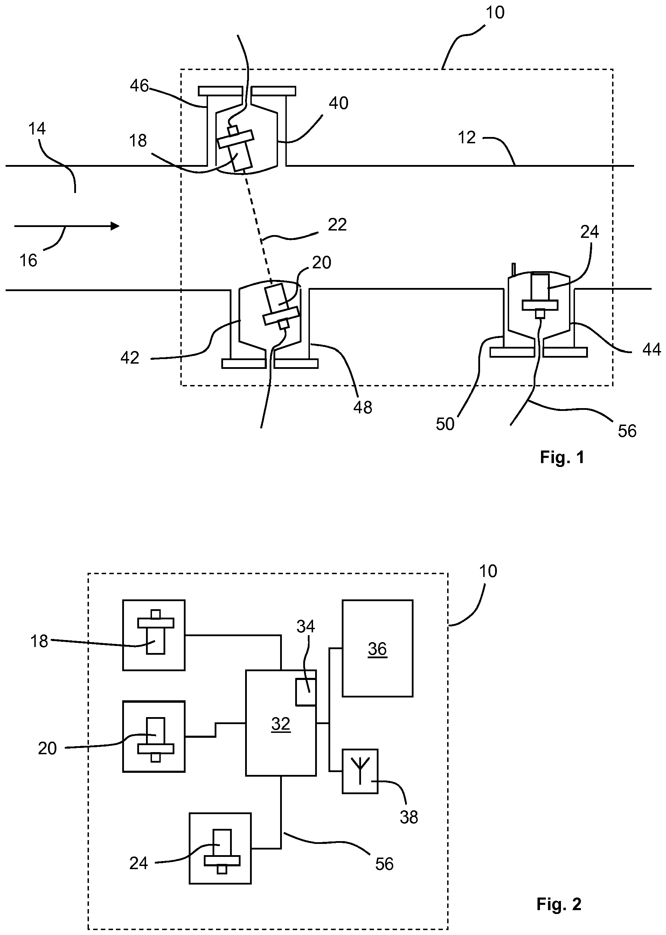

Fig. 1 zeigt im Längsschnitt eine erste Ausführungsform einer erfindungsgemäßen Messvorrichtung 10, welche an einer Rohrleitung 12 montiert ist, in der ein Fluid 14 in der durch den Pfeil 16 bezeichneten Richtung strömt. Die Rohrleitung 12 ist zylindrisch, könnte aber auch einen anderen Querschnitt aufweisen. Ein erster Ultraschallwandler 18 und ein zweiter Ultraschallwandler 20 sind so zueinander ausgerichtet, dass von dem ersten Ultraschallwandler 18 ausgesandter Ultraschall von dem zweiten Ultraschallwandler 20 auf einem Messpfad 22 empfangen werden kann und umgekehrt.

Des Weiteren ist vorzugsweise stromab des ersten und zweiten Ultraschallwandlers 18 und 20 ein dritter, lärmmessender Ultraschallwandler 24 in prinzipiell ähnlicher Weise angeordnet mit im Wesentlichen gleicher Funktionsweise. Der dritte Ultraschallwandler 24 sendet allerdings keine Ultraschallsignale aus, sondern arbeitet ausschließlich als Empfänger, d.h. er misst ausschließlich einkommende Schallsignale. Diese einkommenden Schallsignale, die in der Regel keiner konkreten Abstrahlquelle zugeordnet werden können, werden im Folgenden als "Lärm" bezeichnet. Wenn also irgendein Lärm die Membran des dritten Ultraschallwandlers 24 so anregt, dass dieser ein messbares Signal abgeben kann, kann dieses Signal von einer nachfolgenden Einrichtung als Lärm erfasst werden.

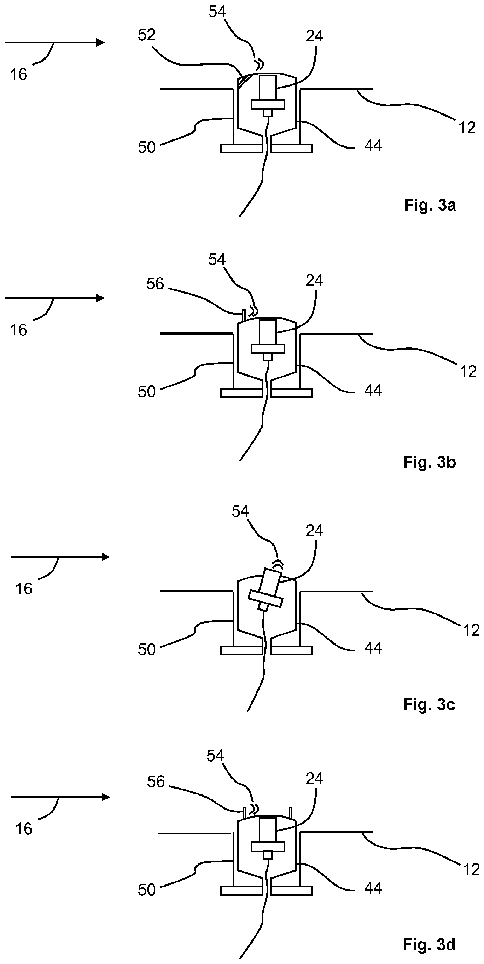

In einer ersten Ausführungsform (Fig.1) erfasst der dritte Ultraschallwandler 24 die Energie des Lärms als Lärmwert, also im wesentlichen die Lautstärke. Solcher Lärm wird schon allein durch das Vorbeiströmen des Fluids 14 erzeugt und/oder durch Strömungsstörungen, insbesondere Abrisswirbel 54, verstärkt. Die Abrisswirbel 54 sollten am Ort oder zumindest in räumlicher Nähe zum Ultraschallwandler 24 liegen. Zur absichtlichen Erzeugung solcher Abrisswirbel kann ein Gehäuse 44 des dritten Ultraschallwandlers 24 dienen, dass zu diesem Zweck ein Stück weit in die Strömung 16 hineinragt wie in Fig. 3a bis d dargestellt. Dadurch wird die Strömung 16 gestört und bei hohen Strömungsgeschwindigkeiten ein Abriss der Strömung bewirkt.

Die Fig. 3a bis d zeigen mögliche Varianten zur Lärmerzeugung. Nach Fig. 3a weist das Gehäuse 44 strömungsstörende und damit lärmverursachende Perforierungen oder Verformungen 52 auf. Verwirbelungen, wie Abrisswirbel sind in den Fig. 3a-d mit einfachen Bögen 54 schematisch dargestellt. Nach Fig. 3b ist an dem Gehäuse 44 ein in die Strömung 14 hineinragender Störkörper 56 angeordnet, der stromaufwärts des Ultraschallwandlers 24 von dem Gehäuse 44 absteht. Der Lärm kann aber auch einfach durch die an dem dritten Ultraschallwandler 24 vorbeiströmende Strömung 16 verursacht sein, wenn der dritte Ultraschallwandler 24 aus seinem Gehäuse 44 in die Strömung 14 hinein hervorsteht, wie in Fig. 3c angedeutet.

Um den dritten Ultraschallwandler 24 unabhängig von der Strömungsrichtung 16 nutzen zu können, also auch dann optimal nutzen zu können, wenn die Strömung entgegengesetzt zur Richtung 16 gerichtet ist, ist in einer Ausführung nach Fig. 3d vorgesehen, dass neben dem Störkörper 56 ein weiterer Störkörper 58 und bezogen auf den Ultraschallwandler 24 diametral dem ersten gegenüberliegend an dem Gehäuse 44 angeordnet ist. Unabhängig von der Strömungsrichtung 16 liegt somit der eine Störkörper stromaufwärts und der andere stromabwärts des dritten Ultraschallwandlers 24.

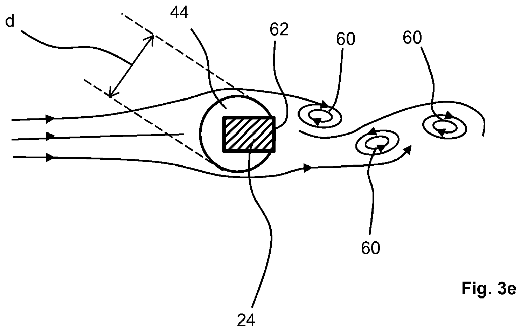

In einer zweiten Ausführungsform wird eine Ablösefrequenz f erfasst. Das soll anhand der Fig. 3e erläutert werden. Der dritte Ultraschallwandler 24 ist in dem Gehäuse 44 angeordnet, das an einer Halterung angeordnet ist, so dass der Ultraschallwandler 24 in die Strömung 14 hineinragt oder gar ganz in der Strömung gelegen ist. Der Ultraschallwandler 24 in seinem Gehäuse 44 stört also die Strömung 14, so dass sich bei entsprechend hoher Strömungsgeschwindigkeit v stromabwärts des dritten Ultraschallwandlers 24 bzw. des Gehäuses 44 Abrisswirbel 60 bilden und sich eine Kärmänsche Wirbelstrasse bildet, wie dies in Fig. 3 dargestellt sein soll. Die Abrisswirbel 60 verursachen eine Druckänderung in der Nähe einer Membran 62 des Ultraschallwandlers 24. Die Membran 62 ist dafür in Richtung der Abrisswirbel 60 gelegen, also an dem der Strömung entgegengesetzten Ende des Gehäuses 44. Die Druckänderungen werden von der Membran des Ultraschallwandlers 24 aufgenommen und regen den Ultraschallwandler 24 auf seiner Arbeitsfrequenz an. Damit entsteht ein Trägersignal, dass mit einer Frequenz f moduliert ist, die der Ablösefrequenz der Abrisswirbel 60 entspricht, an eine Steuer- und Auswerteeinheit 32 zur weiteren Verarbeitung über eine Leitung 56 gegeben.

Fig. 2 zeigt die Messvorrichtung 10 in einem schematischen Blockschaltbild, wobei hier wie im Folgenden gleiche Bezugszeichen die gleichen Merkmale bezeichnen. Eine Steuer- und Auswerteeinrichtung 32, beispielsweise ein Mikroprozessor oder eine andere Logik, wie ein FPGA, ein DSP, ein ASIC, steuert das Aussenden von Ultraschallsignalen durch den ersten bzw. zweiten Ultraschallwandler 18 bzw. 20, beispielsweise als Pulserie bei einer Ultra-

schallfrequenz von 80 kHz und größer und wertet die Laufzeiten der am gegenüberliegenden Ultraschallwandler 20 bzw. 18 empfangenen Signale aus. Daraus kann die Steuer- und Auswerteeinrichtung 32 mit den Gleichungen (1) und (2), wie einleitend im Zusammenhang mit der Fig. 4 beschrieben, die Strömungsgeschwindigkeit v und den Volumenstrom Q berechnen.

Die Steuer- und Auswerteeinrichtung 32 erfasst auch die Signale des dritten Ultraschallwandlers 22, also Signale, die in der ersten Ausführungsform die Intensität des Lärms repräsentieren und in der zweiten Ausführungsform die Ablösefrequenz umfassen. Aus diesen Lärmwerten bestimmt die Steuer- und Auswerteeinheit 32 eine Strömungsgeschwindigkeit.

Die Messergebnisse, also Schallgeschwindigkeit bzw. Laufzeit der Ultraschallsignale, Volumenströme Q, Lärmwerte und Strömungsgeschwindigkeiten können weiterverarbeitet werden, indem sie z.B. in einem Speicher 34 gespeichert, über eine Anzeige 36 dargestellt oder mittels einer Schnittstelle 38 drahtgebunden oder auch drahtlos, etwa seriell, per Ethernet, WLAN, Bluetooth, Mobilfunk oder einem anderen Standard ausgegeben werden oder in der Steuer- und Auswerteeinrichtung 32 selbst weiterverarbeitet werden. Umgekehrt kann ein Computer, ein Notebook, ein PDA oder dergleichen angeschlossen werden, um die Steuer- und Auswerteinrichtung 32 zu konfigurieren, programmieren, Firmware aufzuspielen oder dergleichen.

Die prinzipielle Funktionsweise des erfindungsgemäßen Messverfahrens mit der Messvorrichtung 10 ist dabei Folgende:
Mittels des ersten und des zweiten Ultraschallwandlers 18 und 20 wird in konventioneller Weise die Strömungsgeschwindigkeit v wie oben beschrieben, nämlich über die Laufzeitdifferenz von Ultraschall über Hin- und Rückweg auf dem Messpfad 22 zwischen dem ersten Ultraschallwandler 18 und dem zweiten Ultraschallwandler 20, bestimmt.

Zusätzlich wird mit dem dritten Ultraschallwandler 24 der beim Vorbeiströmen des Fluids 14 im dritten Ultraschallwandler 24 erzeugte Lärm gemessen, der durch das normale Vorbeiströmen des Fluids erzeugt wird oder der durch die Abrisswirbel 54, 60 und den damit verbundenen Druckschwankungen erzeugt wird. Dieser Lärm wird erfasst und als Schallsignal an die Steuer- und Auswerteeinheit 32 übermittelt, die daraus eine Strömungsgeschwindigkeit v bestimmt.

In der zweiten Ausführungsform ist die Ermittlung der Strömungsgeschwindigkeit recht einfach. Die Steuer- und Auswerteeinheit 32 ermittelt aus den Signalen die Ablösefrequenz f. Nach der oben genannten Formel

$$(3) \qquad v = (f * d) / S$$

wird über die Ablösefrequenz f die Strömungsgeschwindigkeit v bestimmt. Dabei ist S die Strouhal-Zahl (-0,21) und d eine Querabmessung des die Abrisswirbel 60 verursachenden Objekts. Das ist in diesem Ausführungsbeispiel das Gehäuse 44, in dem der dritte Ultraschallwandler 24 angeordnet ist. Die Abmessung d entspricht deshalb dem Durchmesser d des Gehäuses 44 (Fig. 3).

Damit aus den Lärmenergiewerten nach der ersten Ausführungsform möglichst genau die Strömungsgeschwindigkeit v bestimmt werden kann, ist es vorteilhaft, den funktionalen Zusammenhang zwischen den gemessenen Lärmenergiewerten und den zugehörigen Strömungsgeschwindigkeitswerten zu kennen. Diese Kenntnis wird bevorzugt in einer Einlernphase oder beim Hochfahren des Fluiddurchflusses gewonnen. Beim Hochfahren des Fluiddurchflusses bzw. in der Einlernphase ist die Strömungsgeschwindigkeit noch in dem Bereich, in dem die konventionelle Geschwindigkeitsmessung mit ersten und zweiten Ultraschallwandler 18 und 20 über die Laufzeitdifferenz funktioniert. Während diese konventionelle Strömungsgeschwindigkeitsmessung erfolgt, wird gleichzeitig mit dem dritten Ultraschallwandler 24 jeweils die zu einer bestimmten Strömungsgeschwindigkeit zugehörige Lärmenergie gemessen. Die einzelnen Strömungsgeschwindigkeitswerte werden dann zusammen mit den jeweils zugehörigen, gemessenen Lärmenergiewerten in dem Speicher 34 gespeichert. In der Steuer- und Auswerteeinrichtung 32 wird der Zusammenhang der Wertepaare durch eine mathematische Funktion approximiert. Als Funktion kann beispielsweise die folgende genommen werden:

$$(4) \qquad LW = c0 + c1 * \log(v) + c2 * [\log(v)]^2$$

wobei LW ein Wert für den Lärm ist, v die Strömungsgeschwindigkeit bezeichnet und c0, c1 und c2 Koeffizienten sind, die durch Approximation an die Messwerte bestimmt werden.

Nach der Einlernphase kann dieser funktionale Zusammenhang genommen werden, um aus den Lärmenergiewerten die Strömungsgeschwindigkeit v zu gewinnen.

Wenn nun die Strömungsgeschwindigkeit so stark steigt, dass die Strömungsgeschwindigkeitsmessung auf konventionelle Art mit den ersten beiden Ultraschallwandlern 18 und 20 versagt, wird anhand der dann gemessenen Lärmwerte LW des dritten Ultraschallwandlers über die approximierte Funktion mittels Extrapolation die Strömungsgeschwindigkeit bestimmt. Dazu wird die Funktion in die hohen Strömungsgeschwindigkeitsbereiche extrapoliert und die Strömungsgeschwindigkeiten, die gemessenen Lärmwerten entsprechen, aus der extrapolierten Funktion gewonnen. Ein testweiser Vergleich mit Referenzwerten, die mit anderer Technik gemessen wurden, ergab eine gute Übereinstimmung.

Die obige Funktion (4) ist nicht die einzig mögliche. Es ist auch denkbar, einen anderen geeigneten funktionalen Zusammenhang zu finden. Wesentliche Kriterien sind, dass die Funktion eine Extrapolation über den mittels konventioneller Laufzeittechnik messbaren Geschwindigkeitsbereich hinaus zulässt und sich in diesem Bereich weiter stetig verhält.

Immer wenn eine Messung der Strömungsgeschwindigkeit v mit den beiden ersten Ultraschallwandlern 18 und 20 möglich ist, kann eine Aktualisierung der Approximation, also eine Aktualisierung der Koeffizienten $c_0$, $c_1$ und $c_2$ erfolgen. Das kann im laufenden Betrieb erfolgen. Dadurch erfolgt eine permanente Anpassung, wodurch die Lärmenergiewerte LW permanent die bestmöglichen Ergebnisse für die Strömungsgeschwindigkeit v liefern.

Auch die beiden Ultraschallwandler 18 und 20 sind vorzugsweise in einem Gehäuse 40 und 42 angeordnet, welches vorzugsweise jeweils in einem senkrecht zur Rohrleitung orientierten Stutzen 46, 48 durch senkrechte Flanschmontage befestigt wird. Im Bereich der Membranen der Ultraschallwandler 18, 20 zur Abstrahlung bzw. Empfang von Ultraschall sind die Gehäuse 40, 42 für Ultraschall durchlässig oder weisen eine Öffnung auf oder die Membranen sind am Ort der Abstrahlung und des Empfangs in das Gehäuse 40, 42 integriert. Die Ultraschallwandler 18, 20 sind gegenüber ihrem Gehäuse 40, 42 um einen Winkel von beispielsweise 15° verkippt, damit der Messpfad 22 in der einen Richtung mit der Strömung 16 und in der anderen Richtung gegen die Strömung 16 verläuft. Dieser Winkel kann, anders als in Figur 1 dargestellt, absichtlich gegen die Strömungsrichtung 16 angestellt werden, so dass erst der durch die Strömung 16 verwehte Ultraschall jeweils auf den gegenüberliegenden Ultraschallwandler 18, 20 gerichtet ist.

Die beiden Gehäuse 40 und 42 weisen vorzugsweise eine strömungsoptimierte Außenkontur, an der die Strömung vorbeiströmt, auf, um die Ausbildung von Abrisswirbeln in der Strömung an den Gehäusen 40 und 42 zu unterdrücken und so die konventionelle Laufzeitmessung der Strömungsgeschwindigkeit v bis in möglichst hohe Geschwindigkeitsbereiche zu erreichen (siehe auch EP 2103912 B1). Das ist vorteilhaft, denn je größere Strömungsgeschwindigkeiten man mit der konventionellen Laufzeit noch messen kann, desto bessere Approximation erhält man.

Es ist weiterhin denkbar, zusätzlich zu den Ultraschallwandlern 18, 20 weitere Paare von Ultraschallwandlern einzusetzen, um weitere Messpfade zu erhalten und die konventionelle Laufzeitmessung zu verbessern, um nach Art eines klassischen Mehrpfadsystems örtlich unterschiedliche Anteile der Strömungsgeschwindigkeit zu messen. Jeder Messpfad gibt dabei Auskunft über die Strömungsgeschwindigkeit in seiner lokalen Umgebung. Ist die Strömung gestört, so muss dies nicht notwendig der mittleren Strömungsgeschwindigkeit entsprechen und es kann auch eine ungenaue Bestimmung des Volumendurchsatzes resultieren. Weitere Messpfade über den Querschnitt der Rohrleitung 12 verbreitern die Basis an Information über das Strömungsprofil und ermöglichen somit eine genauere Messung.

Weiter sei nochmal auf die bereits eingangs angeführte Ausführungsform hingewiesen, die in den Figuren keinen Niederschlag gefunden hat. In dieser Ausführungsform ist der lärmmessende Ultraschallwandler durch ersten oder zweiten Ultraschallwandler selbst gebildet. Wenn die Strömungsgeschwindigkeit gering ist, wird kein oder sehr wenig Lärm erzeugt. Dann herrschen ideale Bedingungen für das Laufzeitdifferenzverfahren. Mit steigender Strömungsgeschwindigkeit wird aber der unvermeidliche Lärm an den Ultraschallwandlern selbst zunehmen, die ja irgendwie die Strömung "berühren" oder womöglich direkt in die Strömung eingebracht sind, wie z.B. bei der Lanzenausführung nach US 4,754,650. In einer Übergangsphase sind dann mit den beiden Ultraschallwandlern immer noch Geschwindigkeitsmessungen nach der Laufzeitmethode möglich, aber der Lärm nimmt zu und Lärmmessungen sind auch möglich. Diese unterschiedlichen Messungen können im Zeitmultiplex erfolgen, so dass man Strömungswerte aus beiden Messverfahren erhält. Mit weiter zunehmender Strömungsgeschwindigkeit wird irgendwann die Laufzeitmethode versagen und nur noch die Lärmmessungen Strömungswerte liefern. Für jede Strömungsgeschwindigkeit wird somit auch mit einem System, das nur aus zwei gegenüberliegenden Ultraschallwandlern besteht, die Messaufgabe erfüllt. Die Lärmmessungen umfassen, wie zuvor an den anderen Ausführungsbeispielen beschrieben, entweder die Erfassung und Auswertung der Lärmenergie oder der Ablösefrequenz.

**Patentansprüche**

1. Messvorrichtung (10) für die Bestimmung einer Strömungsgeschwindigkeit (v) und/oder eines Durchflusses (Q) eines in einer Leitung (12) strömenden Fluids (14) mit mindestens einem ersten Ultraschallwandler (18) und einem zweiten Ultraschallwandler (20), die in der Leitung (12) derart zueinander angeordnet sind, dass im Betrieb der auf einem Messpfad (22) vom ersten Ultraschallwandler (18) zum zweiten Ultraschallwandler (20) ausgesandte und empfangene Ultraschall gegenüber einem auf dem Messpfad (22) in umgekehrter Richtung von dem zweiten Ultraschallwandler (20) gesendeten und von dem ersten Ultraschallwandler (18) empfangenen Ultraschall eine von der Strömungsgeschwindigkeit (v) abhängige Laufzeitdifferenz aufweist, und mit einer Steuer- und Auswerteeinrichtung (32) zur Ansteuerung der Ultraschallwandler (18, 20) und Auswertung der Signale der Ultraschallwandler (18, 20),

**dadurch gekennzeichnet,**

**dass** ein lärmmessender Ultraschallwandler (18, 20; 24) vorgesehen ist, der die beim Vorbeiströmen des Fluids (14) in dem Ultraschallwandler (18, 20; 24) erzeugte Lärmenergie (LW) misst und dass die Steuer- und Auswerteeinrichtung (32) ausgebildet ist, die Strömungsgeschwindigkeit (v) anhand der Lärmenergiemessungen (LW) zu bestimmen.

2. Messvorrichtung nach Anspruch 1, wobei der erste (18) und/oder der zweite Ultraschallwandler (20) den lärmmessenden Ultraschallwandler (24) bildet.

3. Messvorrichtung nach Anspruch 1, wobei der lärmmessende Ultraschallwandler (24) von dem ersten Ultraschallwandler (18) und zweiten Ultraschallwandler (20) verschieden ist.

4. Messvorrichtung (10) nach einem der vorhergehenden Ansprüche, wobei der Lärm (LW) durch Abrisswirbel (60) an dem lärmmessenden Ultraschallwandler (18, 20; 24) selbst oder durch Abrisswirbel (60) an einem Gehäuse (44) für den lärmmessenden Ultraschallwandler (18, 20; 24) erzeugt wird.

5. Messvorrichtung (10) nach einem der vorhergehenden Ansprüche, wobei der Lärm durch Abrisswirbel (54) an einem in die Strömung (16) hineinragenden Störkörper (56) oder durch die Strömung (16) störende Perforierungen oder Verformungen (52) des Gehäuses (44) verursacht ist und der Störkörper (56) unmittelbar stromaufwärts des dritten Ultraschallwandlers (24) angeordnet ist.

6. Messvorrichtung (10) nach einem der vorhergehenden Ansprüche, wobei zwei Störkörper, je einer stromaufwärts und einer stromabwärts des lärmmessenden Ultraschallwandlers, vorgesehen sind.

7. Messvorrichtung (10) nach einem der vorhergehenden Ansprüche, wobei der lärmmessende Ultraschallwandler (24) eine Ablösefrequenz (f) erfasst, mit der sich Wirbel (50) ablösen und dass die Steuer- und Auswerteeinrichtung (32) ausgebildet ist, die Strömungsgeschwindigkeit (v) über die gemessene Ablösefrequenz (f) zu bestimmen.

8. Messvorrichtung nach Anspruch 5, wobei der lärmmessende Ultraschallwandler (24) so angeordnet ist, dass die Wirbel (60) sich im Bereich einer Membran (62) des lärmmessenden Ultraschallwandlers (24) ablösen.

9. Messvorrichtung (10) nach einem der vorhergehenden Ansprüche 5 oder 6, wobei die Steuer- und Auswerteeinheit (32) dazu ausgebildet ist, unter Verwendung der Strouhal-Zahl (S) die Strömungsgeschwindigkeit (v) zu bestimmen, wobei die Bestimmung nach der Formel $v = (f*d)/S$ erfolgt mit d als Querabmessung des dritten Ultraschallwandlers (24) bzw. dessen Gehäuses (44).

10. Messvorrichtung (10) nach einem der vorhergehenden Ansprüche, wobei die Leitung (12) eine Rohrleitung mit zylindrischem oder rechteckigem Querschnitt ist, die als Flaregasleitung ausgebildet ist.

11. Verfahren für die Bestimmung einer Strömungsgeschwindigkeit (v) eines in einer Leitung (12) strömenden Fluids (14), wobei eine von der Strömungsgeschwindigkeit (v) abhängige Laufzeitdifferenz von Ultraschall zwischen einem ersten Ultraschallwandler (18) und einem zweiten Ultraschallwandler (20) ausgewertet wird, nämlich von Ultraschall, der auf einem Messpfad (22) vom ersten (18) zum zweiten Ultraschallwandler (20) läuft und in umgekehrter Richtung vom zweiten (20) zum ersten Ultraschallwandler (18) läuft,

**dadurch gekennzeichnet,**

**dass** mit dem ersten (18) oder zweiten (20) oder einem dritten Ultraschallwandler (24) die beim Vorbeiströmen des Fluids (14) an diesem Ultraschallwandler (18, 20; 24) erzeugte Lärmenergie (LW) gemessen wird und die Strömungsgeschwindigkeit (v) anhand der Lärmenergiemessungen bestimmt wird.

12. Verfahren nach Anspruch 11, wobei in einer Einlernphase oder beim Hochfahren des Fluiddurchflusses (Q) zunächst mittels des ersten und des zweiten Ultraschallwandlers (18, 20) Strömungsgeschwindigkeiten (v) über die Laufzeit von Ultraschallsignalen bestimmt werden und gleichzeitig die Intensität des Lärms (LW) von dem lärmmessenden Ultraschallwandler (24) gemessen wird und die einzelnen Strömungsgeschwindigkeitswerte (v) zusammen mit den jeweils zugehörigen, gemessenen Lärmwerten (LW) gespeichert werden und der Zusammenhang der Wertepaare in einer Auswerteeinheit (32) durch eine mathematische Funktion (3) approximiert wird und bei steigender Strömungsgeschwindigkeit (v), wenn die Strömungsgeschwindigkeitsmessung über die Laufzeit versagt, anhand der dann gemessenen Lärmwerte (LW) des lärmmessenden Ultraschallwandlers (24) über die approximierte Funktion (3) die Strömungsgeschwindigkeit (v) bestimmt wird.

13. Verfahren nach Anspruch 12, wobei die gespeicherten Lärmwerte (LW) immer dann aktualisiert werden und infolgedessen die Approximation aktualisiert wird, wenn eine Messung der Strömungsgeschwindigkeit (v) über die Laufzeit möglich ist.

14. Verfahren nach einem der Ansprüche 11 bis 13, wobei die mathematische Funktion die Form, $LW = c_0 + c_1 * \log(v) + c_2 * [\log(v)]^2$ hat, wobei LW ein Wert für den Lärm und v die Strömungsgeschwindigkeit ist und $c_0$, $c_1$ und $c_2$ mit der Approximation zu bestimmende Koeffizienten sind.

**Claims**

1. A measurement apparatus (10) for the determination of a flow rate (v) and/or of a throughflow (Q) of a fluid flowing in a conduit (12), the measurement apparatus (10) comprising at least one first ultrasonic transducer (18) and one second ultrasonic transducer (20) that are arranged with respect to one another in the conduit (12) such that in operation the ultrasound transmitted and received on a measurement path (22) from the first ultrasonic transducer (18) to the second ultrasonic transducer (20) has a time of flight difference dependent on the flow rate (v) with respect to ultrasound in the reverse direction on the measurement path (22) transmitted by the second ultrasonic transducer (20) and received by the first ultrasonic transducer (18), and a control and evaluation unit (32) configured to control the ultrasonic transducers (18, 20) and to evaluate the signals of the ultrasonic transducers (18, 20),
**characterized in that**
a noise-measuring ultrasonic transducer (18, 20; 24) that is configured to measure a noise generated in the ultrasonic transducer (18, 20; 24) by the flowing past of the fluid (14) and that the control and evaluation unit (32) is configured to determine the flow rate (v) with reference to the noise measurements (LW).

2. Measurement apparatus in accordance with claim 1, wherein the first (18) and/or the second ultrasonic transducer (20) form the noise-measuring ultrasonic transducer (24).

3. Measurement apparatus (10) in accordance with claim 1, wherein the noise-measuring ultrasonic transducer (24) differs from the first ultrasonic transducer (18) and from the second ultrasonic transducer (20).

4. Measurement apparatus (10) in accordance with any preceding claim, wherein the noise (LW) is generated by breakaway vortices (60) present at the noise-measuring ultrasonic transducer (18, 20; 24) itself or by breakaway vortices (60) present at a housing (44) for the noise-measuring ultrasonic transducer (18, 20; 24).

5. Measurement apparatus (10) in accordance with any preceding claim, wherein the noise is caused by one of breakaway vortices (54) present at an interference body (56) projecting into the flow (16), perforations or deformations (52) of the housing (44) disturbing the flow; and wherein the interference body (56) is arranged directly upstream of the third ultrasonic transducer (24).

6. Measurement apparatus (10) in accordance with any preceding claim, wherein two interference bodies are provided, one each upstream and downstream of the noise-measuring ultrasonic transducer.

7. Measurement apparatus (10) in accordance with any preceding claim, wherein the noise-measuring ultrasonic transducer (24) detects a break-off frequency (f) at which vortices (50) break off; and wherein the control and evaluation unit (32) is configured to determine the flow rate (v) via the measured break-off frequency (f).

8. Measurement apparatus (10) in accordance with claim 5, wherein the noise-measuring ultrasonic transducer (24) is arranged such that the vortices (60) break off in the region of a membrane (62) of the noise-measuring ultrasonic transducer (24).

9. Measurement apparatus (10) in accordance with claim 5 or 6, wherein the control and evaluation unit (32) is configured to determine the flow rate (v) while using the Strouhal number (S), with the determination taking place in accordance with the equation $v = (f*d)/S$, where d is a transverse dimension of one of the third ultrasonic transducer (24) and its housing (44).

10. Measurement apparatus (10) in accordance with any preceding claim, wherein the conduit (12) is a pipeline having a cylindrical or rectangular cross-section that is configured a flare gas conduit.

11. A method for the determination of a flow rate (v) of a fluid flowing in a conduit (12), the method comprising the steps of:

- evaluating a time of flight difference of ultrasound dependent on the flow rate (v) between a first ultrasonic transducer (18) and a second ultrasonic transducer (20), namely of ultrasound that propagates on a measurement path (22) from the first ultrasonic transducer (18) to the second ultrasonic transducer (20) and in the reverse direction from the second ultrasonic transducer (20) to the first ultrasonic transducer (18),

**characterized by**

- measuring, on the flowing past of the fluid (14), the noise (LW) generated at an ultrasonic transducer (18, 20; 24) by one of the first ultrasonic transducer (18), the second ultrasonic transducer (20), and a third ultrasonic transducer (24), and
- determining the flow rate (v) using the noise measurements.

12. Method in accordance with claim 11, wherein, in one of a teaching phase and when starting up the fluid throughflow (Q), flow rates (v) are first determined via the time of flight of ultrasound signals by means of the first (18) and second (20) ultrasonic transducers and the intensity of the noise (LW) is simultaneously measured by the noise-measuring ultrasonic transducer (24) and the individual flow rate values (v) are stored together with the respective associated measured noise values (LW) and the relationship of the value pairs is approximated by a mathematical function (3) in an evaluation unit (32) and the flow rate (v) is determined with an increasing flow rate, when the flow rate measurement via the time of flight fails, using the then measured noise values (LW) of the noise-measuring ultrasonic transducer (24) via the approximated function (3).

13. Method in accordance with claim 12, wherein the stored noise values (LW) are always updated and the approximation is consequently updated when a measurement of the flow rate (v) via the time of flight is possible.

14. Method in accordance with any one of the claims 11 to 13, wherein the mathematical function has the form $LW = c0 + c1 * \log(v) + c2 * [\log(v)]^2$, where LW is a value for the noise and v is the flow rate, and c0, c1, and c2 are coefficients to be determined by the approximation.

**Revendications**

1. Dispositif de mesure (10) pour déterminer la vitesse d'écoulement (v) et/ou un débit (Q) d'un fluide (14) s'écoulant dans une conduite (12), comportant au moins un premier transducteur ultrasonore (18) et au moins un second transducteur ultrasonore (20) qui sont agencés dans la conduite (12) de telle sorte l'un par rapport à l'autre qu'en fonctionnement, les ultrasons émis et reçus sur un trajet de mesure (22) depuis le premier transducteur ultrasonore (18) vers le second transducteur ultrasonore (20) présentent une différence de temps de parcours, dépendante de la vitesse d'écoulement (v), par rapport aux ultrasons émis sur le trajet de mesure (22) en sens inverse depuis le second transducteur ultrasonore (20) et reçus par le premier transducteur ultrasonore (18), et comportant un moyen de commande et d'évaluation (32) pour piloter les transducteurs ultrasonores (18, 20) et pour évaluer les signaux des transducteurs ultrasonores (18, 20),
**caractérisé en ce que**
il est prévu un transducteur ultrasonore (18, 20 ; 24) mesurant le bruit, qui mesure l'énergie de bruit (LW) générée lors du passage du fluide (14) dans le transducteur ultrasonore (18, 20 ; 24), et **en ce que** le moyen de commande et d'évaluation (32) est réalisé pour déterminer la vitesse d'écoulement (v) en se basant sur les mesures d'énergie de bruit (LW).

2. Dispositif de mesure selon la revendication 1, dans lequel le premier (18) et/ou le second transducteur ultrasonore (20) constitue le transducteur ultrasonore (24) mesurant le bruit.

3. Dispositif de mesure selon la revendication 1, dans lequel le transducteur ultrasonore (24) mesurant le bruit diffère du premier transducteur ultrasonore (18) et du second transducteur ultrasonore (20).

**4.** Dispositif de mesure (10) selon l'une des revendications précédentes, dans lequel le bruit (LW) est généré par des turbulences d'arrachement (60) au niveau du transducteur ultrasonore (18, 20 ; 24) mesurant le bruit lui-même ou par des turbulences d'arrachement (60) au niveau d'un boîtier (44) pour le transducteur ultrasonore (18, 20 ; 24) mesurant le bruit.

**5.** Dispositif de mesure (10) selon l'une des revendications précédentes, dans lequel le bruit est causé par des turbulences d'arrachement (54) au niveau d'un corps perturbateur (56) pénétrant dans le flux (16) ou par des perforations ou des déformations (52) du boîtier (44) qui perturbent le flux (16), et le corps perturbateur (56) est agencé directement en amont du troisième transducteur ultrasonore (24).

**6.** Dispositif de mesure (10) selon l'une des revendications précédentes, dans lequel il est prévu deux corps perturbateurs, l'un en amont et l'autre en aval du transducteur ultrasonore mesurant le bruit.

**7.** Dispositif de mesure (10) selon l'une des revendications précédentes, dans lequel le transducteur ultrasonore (24) mesurant le bruit détecte une fréquence de détachement (f) à laquelle des turbulences (50) se détachent, et le moyen de commande et d'évaluation (32) est réalisé pour déterminer la vitesse d'écoulement (v) par la fréquence de détachement mesurée (f).

**8.** Dispositif de mesure selon la revendication 5, dans lequel le transducteur ultrasonore (24) mesurant le bruit est agencé de telle sorte que les turbulences (60) se détachent dans la zone d'une membrane (62) du transducteur ultrasonore (24) mesurant le bruit.

**9.** Dispositif de mesure (10) selon l'une des revendications précédentes 5 ou 6, dans lequel le moyen de commande et d'évaluation (32) est réalisé pour déterminer la vitesse d'écoulement (v) en utilisant le nombre de Strouhal (S), la détermination s'effectuant selon la formule $v = (f*d)/S$, avec d étant la dimension transversale du troisième transducteur ultrasonore (24) ou de son boîtier (44).

**10.** Dispositif de mesure (10) selon l'une des revendications précédentes, dans lequel la conduite (12) est une conduite tubulaire ayant une section transversale cylindrique ou rectangulaire et réalisée sous forme de conduite à gaz de torchère.

**11.** Procédé pour déterminer la vitesse d'écoulement (v) d'un fluide (14) s'écoulant dans une conduite (12), dans lequel une différence de temps de parcours des ultrasons, dépendante de la vitesse d'écoulement (v), entre un premier transducteur ultrasonore (18) et un second transducteur ultrasonore (20) est évaluée, à savoir des ultrasons qui s'étendent sur un trajet de mesure (22) depuis le premier (18) vers le second transducteur ultrasonore (20) et en sens inverse depuis le second (20) vers le premier transducteur ultrasonore (18),
**caractérisé en ce que**
au moyen du premier (18) ou du second (20) ou d'un troisième transducteur ultrasonore (24), l'énergie de bruit (LW) générée lors du passage du fluide (14) le long dudit transducteur ultrasonore (18, 20 ; 24) est mesurée et la vitesse d'écoulement (v) est déterminée en se basant sur les mesures de l'énergie de bruit.

**12.** Procédé selon la revendication 11, dans lequel dans une phase d'apprentissage ou lors d'une montée du débit de fluide (Q), tout d'abord des vitesses d'écoulement (v) sont déterminées par le temps de parcours de signaux ultrasonores au moyen du premier et du second transducteur ultrasonore (18, 20), et simultanément l'intensité du bruit (LW) est mesurée par le transducteur ultrasonore (24) mesurant le bruit, et les valeurs de vitesse d'écoulement (v) individuelles sont mémorisées conjointement avec les valeurs de bruit (LW) respectivement associées mesurées, et la relation des paires de valeurs est approximée dans une unité d'évaluation (32) par une fonction mathématique (3), et lors d'une augmentation de la vitesse d'écoulement (v), lorsque la mesure de la vitesse d'écoulement par le temps de parcours est défaillante, la vitesse d'écoulement (v) est déterminée par la fonction approximée (3) en se basant sur les valeurs de bruit (LW) alors mesurées du transducteur ultrasonore (24) mesurant le bruit.

**13.** Procédé selon la revendication 12, dans lequel les valeurs de bruit mémorisées (LW) sont mises à jour et par conséquent l'approximation est mise à jour chaque fois qu'une mesure de la vitesse d'écoulement (v) par le temps de parcours est possible.

**14.** Procédé selon l'une des revendications 11 à 13, dans lequel la fonction mathématique a la forme $LW = c0 + c1 * \log(v) + c2 * [\log(v)]^2$, LW étant une valeur pour le bruit et v étant la vitesse d'écoulement, et c0, c1 et c2 étant des coefficients à déterminer avec l'approximation.

**Fig. 1**

**Fig. 2**

Fig. 3a

Fig. 3b

Fig. 3c

Fig. 3d

Fig. 3e



**Fig. 4** (Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2103911 A1
- US 4754650 A
- EP 2103912 B1
- DE 2809254 A

**In der Beschreibung aufgeführte Nicht-Patentliteratur**

- **DARYL BELOCK.** How much do you flare?. *PROCESS - worldwide 3-2006,* 01. Marz 2006, 18-19